# EUROPÄISCHE PATENTSCHRIFT

(11) **EP 4 031 366 B1**
(45) Veröffentlichungstag und Bekanntmachung des Hinweises auf die Patenterteilung: **06.05.2026**
(21) Anmeldenummer: 20767573.7
(22) Anmeldetag: 10.09.2020
(51) Int. Cl.: B32B 17/10

(54) **VERBUNDSCHEIBE MIT ELEKTRISCH STEUERBAREN OPTISCHEN EIGENSCHAFTEN**
LAMINATED GLASS WITH ELECTRICALLY DRIVEN OPTICAL PROPERTIES
VITRE EN VERRE FEUILLETÉ PRÉSENTANT DES PROPRIÉTÉS OPTIQUES À COMMANDE ÉLECTRIQUE

(30) Priorität: 16.09.2019 EP 19197509
(43) Veröffentlichungstag der Anmeldung: 27.07.2022
(73) Patentinhaber: Saint-Gobain Sekurit France, 60150 Thourotte (FR)
(72) Erfinder: DO ROSARIO, Jefferson, 52064 Aachen (DE); ZHANG, Huixing, 52064 Aachen (DE); SCHULZ, Valentin, 52382 Niederzier (DE)
(74) Vertreter: Gebauer, Dieter Edmund
(86) Internationale Anmeldenummer: PCT/EP2020/075302
(87) Internationale Veröffentlichungsnummer: WO 2021/052852

(56) Entgegenhaltungen:
- WO-A1-2019/086653
- US-A1- 2018 009 198
- US-A1- 2018 281 570

## Beschreibung

Die Erfindung betrifft eine Verbundscheibe mit elektrisch steuerbaren optischen Eigenschaften sowie eine Verbundscheibenanordnung, die eine solche Verbundscheibe umfasst, sowie ein Verfahren zur Herstellung einer solchen Verbundscheibe. Sie betrifft des Weiteren ein Fahrzeug, insbesondere Straßenfahrzeug mit einer solchen Verbundscheibe und Verbundscheibenanordnung.

Optoelektronische Funktionselemente mit elektrisch steuerbaren optischen Eigenschaften sind seit Langem in großer Vielgestaltigkeit bekannt und werden in der industriellen Massenproduktion, beispielsweise in TV-Geräten, Laptops, Mobiltelefonen/Smartphones und Tablets, eingesetzt.

Auch Verbundscheiben mit elektrisch steuerbaren Funktionselementen sind als solche bekannt. Die optischen Eigenschaften der Funktionselemente können durch eine angelegte elektrische Spannung verändert werden. Ein Beispiel für solche Funktionselemente sind PDLC(polymer dispersed liquid crystal)-Funktionselemente, die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Es wurden Windschutzscheiben und auch Glasdächer vorgeschlagen, bei denen durch ein solches Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

Gleichermaßen bekannt sind seit mehreren Jahren sogenannte Head-up-Displays, mit denen für den Fahrer eines PKW besonders wichtige Informationen (wie Geschwindigkeitsbeschränkungen, Navigations-Hinweise, die aktuelle Fahrzeuggeschwindigkeit o. ä.) direkt in seinem Sichtfeld angezeigt werden. Es versteht sich, dass derartige optoelektronische Anzeigeelemente strukturierte Steuerelektroden haben und mit entsprechend komplexeren Ansteuereinheiten zusammenwirken.

SPD(suspended particle device)-, PNLC(polymer networked liquid crystal)- und PDLC-Funktionselemente sind als Mehrschichtfolie kommerziell erhältlich, wobei die aktive Schicht und die zum Anlegen einer Spannung erforderlichen Flächenelektroden zwischen zwei Trägerfolien, typischerweise aus PET, angeordnet sind. Bei der Herstellung der Verbundscheibe wird das Funktionselement in der gewünschten Größe und Form aus der gelieferten Mehrschichtfolie ausgeschnitten und zwischen die Folien einer Zwischenschicht eingelegt, mittels derer zwei Glasscheiben miteinander zur Verbundscheibe laminiert werden.

Es ist des Weiteren bereits bekannt, Verbundscheiben mit eingebauten optoelektronischen Funktionselementen Betätigungsmittel zuzuordnen, mit denen eine manuelle Ein- oder Ausschaltung oder auch andere manuelle Betätigungen vorgenommen werden können. Derartige Betätigungsmittel befinden sich normalerweise an der Armaturentafel oder an einer Betätigungseinheit an der Oberkante der Frontscheibe, angrenzend an den Dachhimmel. Diese Platzierung der Betätigungsmittel erschwert eine intuitive Bedienung und erfordert jeweils Anpassungen zwischen bestimmten Frontscheiben-Typen mit eingebauten Funktionselementen verschiedenen Aufbaus bzw. verschiedener Konfigurationen einerseits und der konkreten Ausführung der Armaturentafel bzw. der Bedieneinheit am oberen Scheibenrand.

Die WO 2019/086653 A1 offenbart eine Verbundscheibe mit einem optoelektronischen Funktionselement, das zwischen zwei Zwischenschichten angeordnet ist. Das optoelektronische Funktionselement kann durch eine kapazitive Schaltfläche gesteuert werden, die im Bereich des Funktionselements angeordnet ist. Dabei gibt es keinerlei Hinweise auf die Ausgestaltung der kapazitiven Schaltfläche und die Anordnung im Schichtstapel.

Der Erfindung liegt daher die Aufgabe zu Grunde, eine verbesserte Verbundscheibe mit integriertem optoelektronischen Funktionselement bereitzustellen, die insbesondere eine intuitive Betätigung des Funktionselementes erleichtert und Anpassungen sonstiger Komponenten der Fahrzeugausstattung an spezielle Konfigurationen der Frontscheibe weitgehend entbehrlich macht. Weiterhin ist die Aufgabe der Erfindung ein verbessertes einfaches Verfahren zur Herstellung einer solchen Verbundscheibe bereitzustellen.

Die Aufgabe der vorliegenden Erfindung wird in ihrem Produktaspekt durch eine Verbundscheibe gemäß dem unabhängigen Anspruch 1 gelöst. In ihrem Anordnungs- bzw. Systemaspekt wird die Aufgabe durch eine Verbundscheibenanordnung mit den Merkmalen des Anspruchs 12 gelöst. Bevorzugte Ausführungen gehen aus den jeweiligen Unteransprüchen hervor.

Die erfindungsgemäße Verbundscheibe umfasst mindestens eine Außenscheibe und eine Innenscheibe, die über eine thermoplastische Zwischenschicht miteinander verbunden sind. Die Verbundscheibe ist dafür vorgesehen, in einer Fensteröffnung beispielsweise eines Fahrzeugs, eines Gebäudes oder eines Raums, den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die Zwischenschicht dient der Verbindung der beiden Scheiben, wie es bei Verbundscheiben üblich ist.

Die Außenscheibe und die Innenscheibe sind bevorzugt aus Glas gefertigt. Grundsätzlich können sie aber auch aus Kunststoff bestehen. Die Dicke der Außenscheibe und der Innenscheibe kann breit variieren und so den Erfordernissen im Einzelfall angepasst werden. Die Außenscheibe und die Innenscheibe weisen bevorzugt Dicken von 0,4 mm bis 3,5 mm auf, besonders bevorzugt von 1 mm bis 2,5 mm. Die Scheiben können klar sein, oder auch getönt oder gefärbt. Beim Einsatz der Verbundscheibe als Windschutzscheibe in PKW ist darauf zu achten, dass die Windschutzscheibe im zentralen Sichtbereich eine ausreichende Lichttransmission aufweist, bevorzugt mindestens 70 % im Haupt-Durchsichtbereich A gemäß ECE-R43.

Weiterhin kann die Erfindung auch bei Dachverglasungen ("Sonnendächern") von verschiedenen Fahrzeugen, insbesondere von PKW, aber beispielsweise auch von Booten/Schiffen oder Bussen, angewendet werden. Die technischen Details entsprechen weitgehend den vorstehend und nachstehend beschriebenen Aspekten der Erfindung. Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder sog. Low-E-Beschichtungen.

Die erfindungsgemäße Verbundscheibe enthält ein optoelektronisches Funktionselement mit elektrisch steuerbaren optischen Eigenschaften, das in die Zwischenschicht eingelagert ist. Das Funktionselement ist zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist.

Das Funktionselement umfasst mindestens eine aktive Schicht, die zwischen einer ersten Trägerfolie und einer zweiten Trägerfolie angeordnet ist. Die aktive Schicht weist die veränderlichen optischen Eigenschaften auf, die durch eine an die aktive Schicht angelegte elektrische Spannung gesteuert werden können. Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten. Das Funktionselement umfasst außerdem Flächenelektroden zum Anlegen der Spannung an die aktive Schicht, die bevorzugt zwischen den Trägerfolien und der aktiven Schicht angeordnet sind. Die erste Trägerfolie ist auf der Seite der aktiven Schicht angeordnet, die in Richtung der Außenscheibe weist und die zweite Trägerfolie ist auf der Seite der aktiven Schicht angeordnet, die in Richtung der Innenscheibe weist.

In einer bevorzugten Ausgestaltung ist das Funktionselement ein PDLC-Funktionselement. Die aktive Schicht eines PDLC-Funktionselements enthält Flüssigkristalle, welche in eine Polymermatrix eingelagert sind. In einer weiteren Ausgestaltung ist das Funktionselement ein SPD- Funktionselement. Dabei enthält die aktive Schicht suspendierte Partikel, wobei die Absorption von Licht durch die aktive Schicht mittels Anlegen einer Spannung an die Flächenelektroden veränderbar ist. Grundsätzlich ist es aber auch möglich, andere Arten von steuerbaren Funktionselementen einzusetzen, beispielweise elektrochrome Funktionselemente. Solche steuerbaren Funktionselemente und deren Funktionsweise sind dem Fachmann an sich bekannt, so dass an dieser Stelle auf eine ausführliche Beschreibung verzichtet werden kann.

Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung, ebenso wie der Anschluss an die Energiequelle zur Temperierung der aktiven Schicht, ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind. Die Dicke des Funktionselements beträgt beispielsweise von 0,1 mm bis 1 mm.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimondotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement liegt insbesondere als Mehrschichtfolie mit zwei äußeren Trägerfolien vor. Bei einer solchen Mehrschichtfolie sind die Flächenelektroden und die aktive Schicht typischerweise zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt.

Die Erfindung schließt den Gedanken ein, die Betätigung eines in die Verbundscheibe lokal integrierten Funktionselementes in ideal intuitiver Weise direkt am Einbauort des Funktionselementes oder jedenfalls in dessen unmittelbarer Nähe direkt auf der Verbundscheibe zu realisieren. Sie schließt weiterhin den Gedanken ein, hierzu ein Schaltelement mit der für diesen Zweck geeigneten kapazitiven Touch-Funktion in das Innere der Verbundscheibe zu integrieren.

Insbesondere ist das optoelektronische Funktionselement in einem ersten Teilbereich der Verbundscheibe vorgesehen, und das Berührungsschaltelement ist in einem zweiten Teilbereich der Verbundscheibe platziert, der im ersten Teilbereich enthalten ist.

Das Berührungsschaltelement ist zwischen der aktiven Schicht des optoelektronischen Funktionselements und der thermoplastischen Zwischenschicht angeordnet. Dabei ist das Berührungsschaltelement auf der Seite der aktiven Schicht angeordnet, die in Richtung der Innenscheibe weist, damit die Funktion des kapazitiven Berührungsschaltelementes bei Bedienung vom Innenraum her sichergestellt ist. Die thermoplastische Zwischenschicht umfasst bevorzugt eine erste Schicht thermoplastischen Materials, die der Außenscheibe zugewandt ist und eine zweite Schicht thermoplastischen Materials, die der Innenscheibe zugewandt ist. Das Berührungsschaltelement ist in diesem Fall zwischen der zweiten Schicht thermoplastischen Materials und der aktiven Schicht angeordnet. Erfindungsgemäß ist das kapazitive Berührungsschaltelement in unmittelbarem Kontakt mit der zweiten Trägerfolie angeordnet. Das Berührungsschaltelement kann so als Teil einer Mehrschichtfolie umfassend das optoelektronische Funktionselement in die Verbundscheibe eingebracht werden, wenn es direkt an der zweiten Trägerfolie angebracht ist. Dies bietet den Vorteil, dass keine weiteren separaten Folienstücke mit einem Berührungsschaltelement in der Verbundglasscheibe integriert sind, die zum Beispiel zu Dickenänderungen der Scheibe führen können.

In einer ersten Realisierungsvariante kann dies dadurch geschehen, dass das Berührungsschaltelement eine strukturierte Leitschicht aufweist, die auf der der Innenscheibe zugeordneten Oberfläche des optoelektronischen Funktionselements angeordnet ist. Demnach ist im Bereich des Berührungsschaltelements eine strukturierte Leitschicht angeordnet. Die strukturierte Leitschicht kann dabei auf die zweite Trägerfolie aufgebracht sein durch zum Beispiel Aufkleben von vorbereiteten Leiterstrukturen oder durch Aufdrucken. Bevorzugt sieht diese Variante so aus, dass die strukturierte Leitschicht eine Berührungsschalt-Struktur aufweist, die durch Laserstrukturierung einer leitfähigen Schicht gebildet ist, wobei die leitfähige Schicht in einem vakuumbasierten Beschichtungsverfahren abgeschieden ist. Geeignete vakuumbasierte Beschichtungsverfahren sind zum Beispiel CVD (chemical vapour deposition) oder PVD (physical vapour deposition).

Diese Variante ist besonders geeignet für Anwendungen, bei denen eine erfindungsgemäße Verbundscheibe mit einer kommerziell erhältlichen PDLC-Verbundfolie oder einem anderen standardmäßig vorgefertigten Zwischenschicht-Laminat mit integriertem Funktionselement produziert werden soll. Zur Realisierung der Erfindung ist dann entweder lediglich eine Oberfläche des gelieferten Laminats oder die der Zwischenschicht zugewandte Seite der Innenscheibe an einem geeigneten Ort mit dem Berührungsschaltelement (und Zuleitungen) zu versehen.

In einer alternativen Ausführung der Erfindung ist das Berührungsschaltelement durch eine dedizierte Berührungsschalt-Struktur der der Innenscheibe zugewandten flächigen Steuerelektrode des optoelektronischen Funktionselementes gebildet. Diese Ausführung eignet sich für Anwendungen, bei denen entweder eine Steuerelektrodenstruktur des optoelektronischen Funktionselementes von vornherein unter Berücksichtigung der erfindungsgemäßen Funktion entworfen und dann entsprechend hergestellt werden kann. Sie erfordert entsprechend eine erfindungsgemäße Konfigurierung des Zwischenschicht-Laminats, ermöglicht dafür aber den Fortfall von Nachbehandlungs-Schritten wie sie bei der weiter oben erwähnten Realisierungsvariante erforderlich sind. Besonders bevorzugt wird die Berührungsschalt-Struktur durch Laserstrukturierung der der Innenscheibe zugewandten flächigen Steuerelektrode erzeugt. Dies kann durch Laserbehandlung einer kommerziell erhältlichen Verbundfolie enthaltend das optoelektronische Funktionselement geschehen. Die Laserstrukturierung lässt sich flexibel an die jeweilige Einbausituation anpassen, sodass der Ort und Form eines Berührungsschaltelements in der Fläche leicht variiert werden kann.

Die Lage des Berührungsschaltelementes kann für den Nutzer durch geeignete Markierungen optisch leicht erkennbar gemacht werden, beispielsweise durch Vorsehen eines Schwarzdrucks am Berührungsschaltelement oder um dieses herum. Ein derartiger Schwarzdruck ist beispielsweise bei PKW-Windschutzscheiben oder Sonnendächern in deren Randbereich ohnehin vorgesehen, sodass eine entsprechende Markierung des Berührungsfeldelementes praktisch keinen zusätzlichen technologischen Aufwand erfordert und die Scheibe nicht verteuert.

In einer für einfache Schaltfunktionen geeigneten Konfiguration weist das Berührungsschaltelement zwei parallele oder konzentrische Leiter auf, die einen im Abstand im Bereich zwischen 0,3 und 1,5 cm, insbesondere zwischen 0,5 und 1 cm, voneinander angeordneten Berührungsschalt-Abschnitt haben. Der Leiterabstand ist für die zuverlässige Realisierung einer Schaltfunktion mittels eines Fingers oder auch des Daumens eines Erwachsenen zu bemessen und kann ggf. auch außerhalb des hier genannten Bereiches liegen.

Für komplexere Steuerfunktionen weist das Berührungsschaltelement bevorzugt eine Mehrzahl von voneinander beabstandeten, nach außerhalb des optoelektronischen Funktionselementes separat angeschlossenen bzw. anschließbaren Leitern auf. Bei einer solchen Konfiguration kann insbesondere mit dem von Smartphones und ähnlichen Geräten bekannten "Wischen" über das Schaltelement oder eine gezielte Berührung eines Teilbereiches desselben eine bestimmte Einstellung aus mehreren verfügbaren ausgewählt werden.

Die erfindungsgemäße Verbundscheibenanordnung umfasst neben der weiter oben erläuterten Verbundscheibe eine Ansteuereinheit zur Steuerung der optischen Eigenschaften des optoelektronischen Funktionselementes und eine mit dem Berührungsschaltelement verbundene Schaltsteuereinheit zum Schalten zur manuellen Steuerung des optoelektronischen Funktionselementes, insbesondere zum Ein-/Ausschalten oder zu einer Kontrast- oder Helligkeitseinstellung oder Ähnlichem.

In einer für Steuervorgänge, die über ein einfaches Ein-/Ausschalten hinausgehen, geeigneten Konfiguration hat die Schaltsteuereinheit eine der Anzahl der separat verbindbaren Leiter des Berührungsschaltelementes entsprechende Anzahl von Eingängen. Im Ansprechen auf einen Signaleingang an den jeweiligen Signaleingängen aktiviert sie einen von mehr als zwei Steuerzuständen des optoelektronischen Funktionselementes.

Ein weiterer Aspekt der vorliegenden Erfindung ist ein Verfahren zur Herstellung einer erfindungsgemäßen Verbundscheibe.

Ein optoelektronisches Funktionselement umfassend einen Schichtstapel umfassend in der angegebenen Reihenfolge eine erste Trägerfolie, eine transparente flächige Steuerelektrode, eine aktive Schicht, eine transparente flächige Steuerelektrode und eine zweite Trägerfolie, wird mit einem kapazitiven Berührungsschaltelement versehen. Das optoelektronische Funktionselement wird daraufhin über eine thermoplastische Zwischenschicht zwischen eine Außenscheibe und eine Innenscheibe einlaminiert.

Das Verfahren ermöglicht somit die einfache Herstellung einer Verbundscheibe umfassend ein optoelektronisches Funktionselement mit einem kapazitiven Berührungsschaltelement über ein einfaches Laminierverfahren. Da die erforderlichen Strukturen für den Berührungssensor bereits in die Mehrschichtfolie mit dem optoelektronischen Funktionselement integriert sind, muss beim Laminieren nur dieses eine Zusatzteil integriert und ausgerichtet werden und mit elektrischen Anschlüssen versehen werden. Dies vereinfacht das Herstellungsverfahren gegenüber der üblichen Herstellung erheblich, bei der für die Berührungsschaltelemente jeweils separate Bauteile erforderlich sind. Zudem werden Materialunverträglichkeiten durch zusätzlich eingelegte separate Folien mit einem Berührungsschaltelement vermieden.

Der Schichtstapel ohne kapazitives Berührungsschaltelement ist kommerziell erhältlich. Dieser wird nun bevorzugt durch Aufdrucken oder Aufkleben einer strukturierten Leitschicht auf der Oberfläche der zweiten Trägerfolie mit einem kapazitiven Berührungsschaltelement versehen. Alternativ bevorzugt wird auf der freiliegenden Oberfläche der zweiten Trägerfolie eine leitfähige Schicht mindestens im Bereich des kapazitiven Berührungsschaltelements abgeschieden bevorzugt über ein CVD- oder PVD-Verfahren. Diese leitfähige Schicht kann anschließend mit einem Laser strukturiert werden, sodass eine Berührungsschalt-Struktur erzeugt wird.

Alternativ bevorzugt wird ein kapazitives Berührungsschaltelement durch Laserstrukturierung der flächigen Steuerelektrode erzeugt, die an die zweite Trägerfolie angrenzt. Dabei wird der Laser auf die Schicht mit der flächigen Steuerelektrode fokussiert ohne dass die darüber liegende Trägerfolie beschädigt wird. Dabei entstehen elektrisch isolierende Bereiche, die einzelne Leiterbahnen voneinander trennen.

Die Erfindung wird anhand von Figuren und Ausführungsbeispielen näher erläutert. Die Zeichnung ist eine schematische Darstellung und nicht maßstabsgetreu. Die Figuren schränken die Erfindung in keiner Weise ein.

Es zeigen:
- Fig. 1: eine Draufsicht auf eine erste Ausgestaltung der erfindungsgemäßen Verbundscheibe als Windschutzscheibe mit elektrisch steuerbarer Sonnenblende,
- Fig. 2: einen Querschnitt durch die Windschutzscheibe aus Fig. 1,
- Fig. 3: eine vergrößerte Darstellung des Bereichs Z aus Fig. 2,
- Fig. 4: eine schematische perspektivische Darstellung einer Ausführungsform der erfindungsgemäßen Verbundscheibe,
- Fig. 5: eine schematische Darstellung einer alternativen Realisierung des Berührungsschaltelementes bei einer erfindungsgemäßen Verbundscheibe und
- Fig. 6: eine schematische Darstellung einer Ausführungsform der erfindungsgemäßen Verbundscheibenanordnung in Art eines Funktions-Blockschaltbildes.

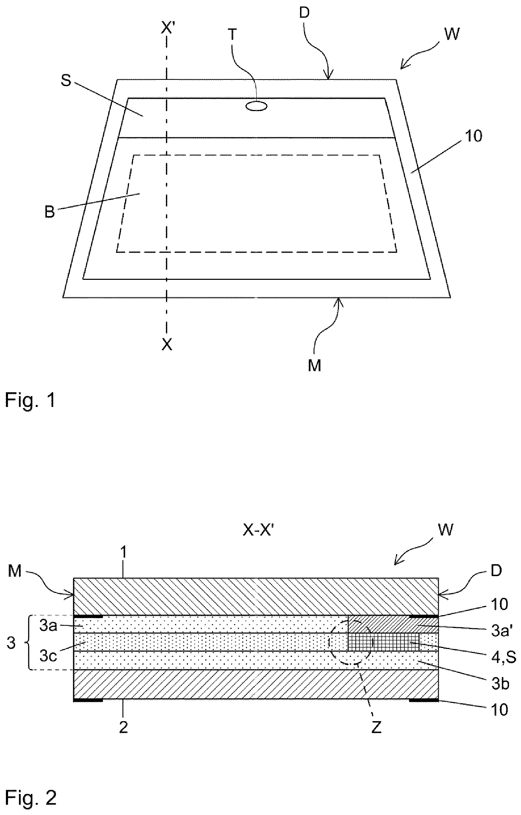

Fig. 1, Fig. 2 und Fig. 3 zeigen je ein Detail einer Windschutzscheibe W mit elektrisch steuerbarer Sonnenblende S, einer beispielhaften Ausgestaltung der erfindungsgemäßen Verbundscheibe mit elektrisch steuerbaren optischen Eigenschaften. Die Windschutzscheibe W umfasst eine Außenscheibe 1 und eine Innenscheibe 2, die über eine Zwischenschicht 3 miteinander verbunden sind. Die Außenscheibe 1 weist eine Dicke von 2,1 mm auf und besteht aus einem grün eingefärbten Kalk-Natron-Glas. Die Innenscheibe 2 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkanten M auf.

Die Windschutzscheibe ist in einem Bereich oberhalb des zentralen Sichtbereichs B (wie in ECE-R43 definiert) mit einer elektrisch steuerbaren Sonnenblende S ausgestattet. Im oberen Randbereich der Sonnenblende S ist ein Berührungsschaltelement T zum Ein-/Ausschalten der Sonnenblendenfunktion und gegebenenfalls (je nach konkreter Ausgestaltung) auch zu einer manuellen Einstellung des Transmissionsgrades der Sonnenblende vorgesehen.

Die Sonnenblende S ist durch eine kommerziell erhältliche PDLC-Mehrschichtfolie als Funktionselement 4 gebildet, die in die Zwischenschicht 3 eingelagert ist. Die Zwischenschicht 3 umfasst insgesamt drei thermoplastische Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1 verbunden, die zweite thermoplastische Schicht 3b mit der Innenscheibe 2. Die dazwischenliegende dritte thermoplastische Schicht 3c weist einen Ausschnitt auf, in welchen die zugeschnittene PDLC-Mehrschichtfolie im Wesentlichen passgenau, das heißt an allen Seiten etwa bündig, eingelegt ist. Die dritte thermoplastische Schicht 3c bildet also gleichsam eine Art Passepartout für das etwa 0,4 mm dicke Funktionselement 4, welches somit rundum in thermoplastisches Material eingekapselt und dadurch geschützt ist.

Die erste thermoplastische Schicht 3a weist einen getönten Bereich 3a' auf, der zwischen dem Funktionselement 4 und der Außenscheibe 1 angeordnet ist. Die Lichttransmission der Windschutzscheibe wird dadurch im Bereich der Sonnenblende 4 zusätzlich herabgesetzt und das milchige Aussehen des PDLC-Funktionselements 4 im diffusiven Zustand abgemildert. Die Ästhetik der Windschutzscheibe wird dadurch deutlich ansprechender gestaltet.

Das steuerbare Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 6, 7 bestehen aus PET und weisen eine Dicke von beispielsweise 0,125 mm auf.

Die Trägerfolien 6, 7 sind auf der der aktiven Schicht 5 zugewandten Oberfläche mit einer Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet durch einen silberhaltigen Siebdruck) und ebenfalls nicht dargestellte Verbindungskabel mit der Bordelektrik verbindbar. Zur Ausführung der vorliegenden Erfindung kann die der Innenscheibe 2 der Windschutzscheibe W zugewandte Flächenelektrode 9 in einem kleinen Teilbereich mit einer durch Laserbearbeitung erzeugten Leiterstruktur versehen sein, durch die das Berührungsschaltelement T (Fig. 1) gebildet und einerseits mit der großflächigen ITO-Beschichtung zur Realisierung der Sonnenblendenfunktion und andererseits mit der Bordelektronik verbunden wird.

Die Windschutzscheibe weist, wie üblich, einen umlaufenden peripheren Abdeckdruck 10 auf, der durch eine opake Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 4 zur Oberkante D und den Seitenkanten der Windschutzscheibe ist kleiner als die Breite des Abdeckdrucks 10, so dass die Seitenkanten des Funktionselements 4 - mit Ausnahme der zum zentralen Sichtfeld B weisenden Seitenkante - durch den Abdeckdruck 10 verdeckt sind. Auch die nicht dargestellten elektrischen Anschlüsse werden sinnvollerweise im Bereich des Abdeckdrucks 10 angebracht und somit versteckt. Ebenso kann das Berührungsschaltelement T im Bereich des Abdeckdrucks platziert sein, und zwar insbesondere dann, wenn es durch eine nicht-transparente Leiterstruktur gebildet ist (siehe dazu weiter unten).

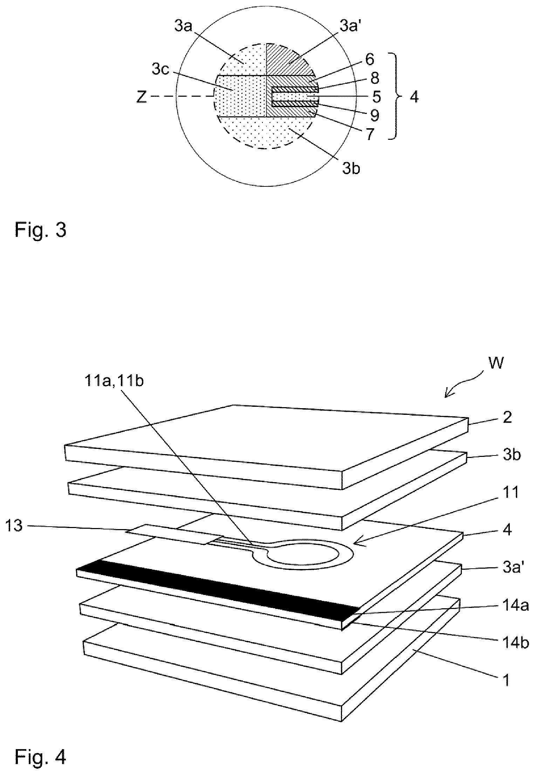

Fig. 4 zeigt eine beispielhafte Ausführung der Windschutzscheibe W, die den in Fig. 2 gezeigten Aufbau hat, mit einer speziellen Konfiguration des Berührungsfeldelementes. Die Komponenten der Windschutzscheibe sind mit den auch in Fig. 2 genutzten Bezugsziffern bezeichnet, und das Berührungsschaltelement hat hier die Bezugsziffer 11.

Wie in der Figur zu erkennen ist, umfasst das Berührungsfeldelement 11 zwei konzentrische kreisförmige Leiter 11a, 11b, die mit einem dedizierten Verbinder 13 (etwa in Form eines MQS(micro quadlock system)-Steckers) zum externen Anschluss des Berührungsschaltelementes verbunden sind. Der Verbinder 13 ist an einer anderen Seitenkante des optoelektronischen Funktionselementes 4 angeordnet als die Busbars 14a, 14b, die das Funktionselement mit einer (hier nicht gezeigten) externen Ansteuerschaltung verbinden. Das Berührungsschaltelement 11 mit den Leitern 11a, 11b kann - wie weiter oben angemerkt - durch Laserstrukturierung einer der transparenten Flächenelementen 8, 9 des optoelektronischen Funktionselementes 4 unter Nutzung an sich bekannter Techniken und Laserstrahlbearbeitungsvorrichtungen gebildet sein. In

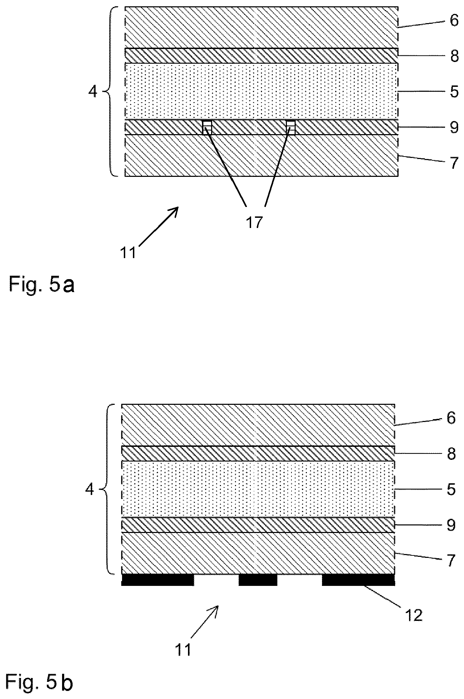

Figur 5a ist ein Querschnitt durch einen Bereich mit einem Berührungsschaltelement 11 gezeigt, das durch Laserstrukturierung einer Flächenelektrode 9 des Funktionselements 4 erzeugt wurde. Die elektrisch isolierenden Bereiche 17 sind durch Laserbehandlung erzeugt. Fig. 5b zeigt eine alternative Realisierung des Berührungsschaltelementes 11, bei der eine separate Leitschicht 12 auf dem optoelektronischen Funktionselement 4 erzeugt ist. Hier ist das Berührungsschaltelement 11 durch Strukturierung der zusätzlichen Leitschicht 12 gebildet, während die Flächenelektroden 8, 9 des Funktionselementes 4 hier ausschließlich zur Realisierung von dessen sonstigen Funktionen dienen.

Diese Ausführung ermöglicht den Einsatz von unabhängig von der Berührungsschaltfunktion konfigurierten Zwischenschicht-Laminaten und die nachträgliche Implementierung der Berührungsschaltfunktion als Teil des Funktionselements 4.

In Abwandlung des in Fig. 5b gezeigten Aufbaus kann die Leitschicht 12 grundsätzlich auch auf der dem Funktionselement 4 zugewandten Innenoberfläche der Innenscheibe einer Windschutzscheibe vorgesehen sein. Die zusätzliche Leitschicht 12 kann beispielswiese durch ein an sich bekanntes Druckverfahren oder auch durch bzw. Sputtern gebildet werden.

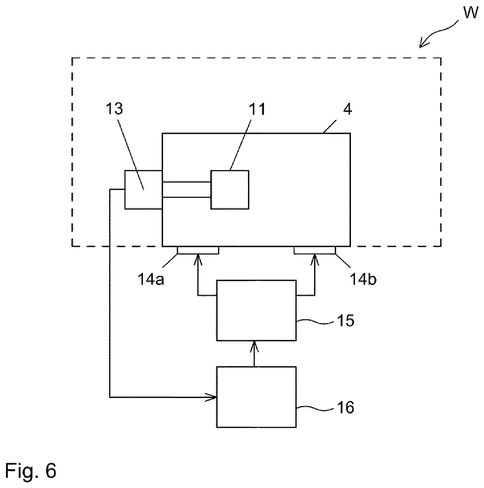

Fig. 6 zeigt schematisch eine Verbundscheibenanordnung, die eine erfindungsgemäß ausgestaltete Windschutzscheibe W und zugehörige Steuereinrichtungen in einem (nicht dargestellten) Fahrzeug umfasst.

In einem Teilbereich der Windschutzscheibe W ist ein optoelektronisches Funktionselement 4 angeordnet, und wiederum in einem Teilbereich der Fläche des Funktionselementes 4 ist ein Berührungsschaltelement 11 vorgesehen. Wie bereits in Fig. 5 gezeigt, sind zum Anschluss des Funktionselementes 4 in an sich bekannter Weise zwei Busbars 14a, 14b an einer ersten Seitenkante desselben angeordnet, und dem Berührungsschaltelement 11 ist ein spezieller Verbinder 13 zugeordnet, der an einer anderen Seitenkante des Funktionselementes platziert ist. Sowohl anstelle der Busbars 14a, 14b als auch des oben als MQS-Stecker spezifizierten Verbinders 13 sind grundsätzlich auch andersartige Verbinder einsetzbar, sofern diese sich zum Einsatz in bzw. mit einer Verbundscheibe der hier in Rede stehenden Art eignen.

Während das Funktionselement 4 in an sich bekannter Weise durch eine Ansteuereinheit 15 zur Realisierung seiner üblichen Funktionen angesteuert wird, ist das Berührungsschaltelement 11 über den Verbinder 13 mit einer Schaltsteuereinheit 16 verbunden, die beispielsweise den Ein- oder Aus-Zustand des Funktionselementes 4 oder ggfs. auch von Teilabschnitten desselben oder auch gewisse Parameter des Funktionselementes 4 aufgrund einer manuellen Betätigung durch den Fahrer steuert. Hierbei kann es sich beispielsweise um einen Transmissionsgrad oder ein Kontrastverhältnis bzw. eine Helligkeit oder andere Parameter handeln, deren individuelle Einstellung durch den Fahrer des Fahrzeugs in Abhängigkeit von den Umgebungsbedingungen oder gemäß seinen Präferenzen sinnvoll oder wünschenswert ist.

In der Figur ist die Verknüpfung der Funktionen von Ansteuereinheit 15 und Schaltsteuereinheit 16 lediglich schematisch durch eine einfache Signalverbindung illustriert; das Zusammenwirken der beiden Einheiten kann jedoch komplexer ausgestaltet sein, und beide Einheiten 15, 16 können auch miteinander integriert sein.

Die Ausführung der Erfindung ist insgesamt nicht auf die oben hervorgehobenen Aspekte und oben beschriebenen Beispiele beschränkt, sondern ebenso in einer Vielzahl von Abwandlungen möglich, die im Rahmen der anhängenden Ansprüche liegen.

### Bezugszeichen

- 1: Außenscheibe
- 2: Innenscheibe
- 3: thermoplastische Zwischenschicht
- 3a: erste Schicht der Zwischenschicht 3
- 3a': getönter Bereich der ersten Schicht 3a
- 3b: zweite Schicht der Zwischenschicht 3
- 3c: dritte Schicht der Zwischenschicht 3
- 4; S: Funktionselement mit elektrisch regelbaren optischen Eigenschaften
- 5: aktive Schicht des Funktionselements 4
- 6: erste Trägerfolie des Funktionselements 4
- 7: zweite Trägerfolie des Funktionselements 4
- 8, 9: Flächenelektrode des Funktionselements 4
- 10: Abdeckdruck
- 11; T: Berührungsschaltelement
- 11a, 11b: Leiter des Berührungsschaltelements
- 12: Leitschicht
- 13: Verbinder des Berührungsschaltelements
- 14a, 14b: Ansteuer-Verbinder (Busbars)
- 15: Ansteuereinheit
- 16: Schaltsteuereinheit
- 17: elektrisch isolierender Bereich

- B: Sichtbereich der Windschutzscheibe
- D: Oberkante der Windschutzscheibe
- M: Unterkante der Windschutzscheibe
- S: Sonnenblende
- W: Windschutzscheibe
- X-X': Schnittlinie
- Z: Detail-Bereich der Windschutzscheibe

## Patentansprüche

1. Verbundscheibe mit elektrisch steuerbaren optischen Eigenschaften, umfassend eine Außenscheibe (1) und eine Innenscheibe (2), die über eine thermoplastische Zwischenschicht (3) miteinander verbunden sind,
wobei ein optoelektronisches Funktionselement (4; S) mit elektrisch steuerbaren optischen Eigenschaften in die Zwischenschicht (3) eingelagert ist, umfassend eine aktive Schicht (5), der an beiden Oberflächen transparente flächige Steuerelektroden (8, 9) zugeordnet sind, zwischen einer ersten Trägerfolie (6) und einer zweiten Trägerfolie (7), und
wobei zwischen der aktiven Schicht (5) und der thermoplastischen Zwischenschicht (3) in unmittelbarem Kontakt mit der in Richtung der Innenscheibe (2) weisenden zweiten Trägerfolie (7) ein kapazitives Berührungsschaltelement (T; 11) angeordnet ist.

2. Verbundscheibe nach Anspruch 1, wobei im Bereich des Berührungsschaltelements (T; 11) eine strukturierte Leitschicht (12) angeordnet ist, die auf der der Innenscheibe zugeordneten Oberfläche des optoelektronischen Funktionselements (4; S) angeordnet ist.

3. Verbundscheibe nach Anspruch 2, wobei die strukturierte Leitschicht (12) eine Berührungsschalt-Struktur aufweist, die durch Laserstrukturierung einer in einem vakuumbasierten Beschichtungsverfahren abgeschiedenen leitfähigen Schicht gebildet ist.

4. Verbundscheibe nach Anspruch 1, wobei das Berührungsschaltelement (T; 11) durch eine dedizierte Berührungsschalt-Struktur der der Innenscheibe zugewandten flächigen Steuerelektrode (9) des optoelektronischen Funktionselementes (4; S) gebildet ist.

5. Verbundscheibe nach einem der Ansprüche 1 bis 4, wobei das optoelektronische Funktionselement (4; S) ein PDLC-Funktionselement, PNLC-Funktionselement, SPD-Funktionselement oder elektrochromes Funktionselement ist.

6. Verbundscheibe nach einem der Ansprüche 1 bis 5, wobei das optoelektronische Funktionselement (4; S) in einem ersten Teilbereich (S) der Verbundscheibe vorgesehen ist und das Berührungsschaltelement (T; 11) in einem zweiten Teilbereich der Verbundscheibe platziert ist, der im ersten Teilbereich enthalten ist.

7. Verbundscheibe nach einem der Ansprüche 1 bis 6, wobei das optoelektronische Funktionselement (4; S) einen mit dem Berührungsschaltelement (T; 11) elektrisch verbundenen Steuer-Verbinder (13) aufweist, wobei der Steuer-Verbinder bevorzugt einen MQS-Stecker aufweist.

8. Verbundscheibe nach einem der Ansprüche 1 bis 7, wobei das Berührungsschaltelement (T; 11) zwei parallele oder konzentrische Leiter (11a, 11b) aufweist, die einen im Abstand im Bereich zwischen 0,3 und 1,5 cm, insbesondere zwischen 0,5 und 1 cm, voneinander angeordneten Berührungsschalt-Abschnitt haben.

9. Verbundscheibe nach einem der Ansprüche 1 bis 8, wobei das Berührungsschaltelement (T; 11) eine Mehrzahl von voneinander beabstandeten, nach außerhalb des optoelektronischen Funktionselementes (4; S) separat angeschlossenen bzw. anschließbaren Leitern, aufweist.

10. Verbundscheibe nach einem der Ansprüche 1 bis 9, wobei dem Berührungsschaltelement (T; 11) eine optische Markierung, insbesondere ein Schwarzdruck-Bereich, zugeordnet ist, die seine Lage für den Nutzer kennzeichnet.

11. Verbundscheibe nach einem der Ansprüche 1 bis 10, ausgebildet als Windschutzscheibe (W) oder Dachverglasung eines Straßenfahrzeugs, insbesondere PKW, oder eines Luftfahrzeugs oder Wasserfahrzeugs, insbesondere Bootes oder Passagierschiffes.

12. Verbundscheibenanordnung, insbesondere Fahrzeugverglasungseinheit, mit einer Verbundscheibe nach einem der Ansprüche 1 bis 11,
einer Ansteuereinheit (15) zur Steuerung der optischen Eigenschaften des optoelektronischen Funktionselementes (4; S) und
einer mit dem Berührungsschaltelement (T; 11) verbundenen Schaltsteuereinheit (16) zum Schalten zur manuellen Steuerung des optoelektronischen Funktionselementes (4; S), insbesondere zum Ein-/Ausschalten oder zu einer Kontrast- oder Helligkeitseinstellung oder Ähnlichem.

13. Verbundscheibenanordnung nach Anspruch 12, wobei die Verbundscheibe gemäß Anspruch 9 ausgebildet ist und
die Schaltsteuereinheit (16) eine der Anzahl der separat verbindbaren Leiter des Berührungsschaltelementes (T; 11) entsprechende Anzahl von Eingängen aufweist und im Ansprechen auf einen Signalempfang an den jeweiligen Signaleingängen einen von mehr als zwei Steuerzuständen des optoelektronischen Funktionselementes (4; S) aktiviert.

14. Straßenfahrzeug, insbesondere PKW, mit einer Verbundscheibenanordnung nach Anspruch 12 oder 13.

15. Verfahren zur Herstellung einer Verbundscheibe nach einem der Ansprüche 1 bis 11, wobei
- ein optoelektronisches Funktionselement (4; S), das eine aktive Schicht (5), der an beiden Oberflächen transparente flächige Steuerelektroden (8, 9) zugeordnet sind, zwischen einer ersten Trägerfolie (6) und einer zweiten Trägerfolie (7) umfasst,
bereitgestellt wird und mit einem kapazitiven Berührungsschaltelement (T; 11) versehen wird und
- das optoelektronische Funktionselement zwischen einer Außenscheibe (1) und einer Innenscheibe (2) über eine thermoplastische Zwischenschicht (3) einlaminiert wird.

## Claims

1. Composite pane having electrically controllable optical properties, comprising an outer pane (1) and an inner pane (2), which are joined to one another via a thermoplastic intermediate layer (3),
wherein an optoelectronic functional element (4; S) having electrically controllable optical properties is embedded in the intermediate layer (3), which functional element comprises an active layer (5), with which transparent flat control electrodes (8, 9) are associated on both surfaces, between a first carrier film (6) and a second carrier film (7), and
wherein a capacitive contact switching element (T; 11) is arranged between the active layer (5) and the thermoplastic intermediate layer (3), in direct contact with the second carrier film (7) facing in the direction of the inner pane (2).

2. Composite pane according to claim 1, wherein in the region of the contact switching element (T; 11), a patterned conductive layer (12) is arranged, which is arranged on the surface of the optoelectronic functional element (4; S) associated with the inner pane.

3. Composite pane according to claim 2, wherein the patterned conductive layer (12) has a contact switch structure that is formed by laser patterning of a conductive layer deposited in a vacuum-based coating method.

4. Composite pane according to claim 1, wherein the contact switching element (T; 11) is formed by a dedicated contact switch structure of the flat control electrode (9) of the optoelectronic functional element (4; S) facing the inner pane.

5. Composite pane according to one of claims 1 through 4, wherein the optoelectronic functional element (4; S) is a PDLC functional element, PNLC functional element, SPD functional element, or electrochromic functional element.

6. Composite pane according to one of claims 1 through 5, wherein the optoelectronic functional element (4; S) is provided in a first subregion (S) of the composite pane and the contact switching element (T; 11) is placed in a second subregion of the composite pane, which is included in the first subregion.

7. Composite pane according to one of claims 1 through 6, wherein the optoelectronic functional element (4; S) has a control connector (13) electrically connected to the contact switching element (T; 11), wherein the control connector preferably has an MQS plug.

8. Composite pane according to one of claims 1 through 7, wherein the contact switching element (T; 11) has two parallel or concentric conductors (11a, 11b) that have a contact switch section spaced at a distance in the range between 0.3 and 1.5 cm, in particular between 0.5 and 1 cm, from one another.

9. Composite pane according to one of claims 1 through 8, wherein the contact switching element (T; 11) has a plurality of conductors that are spaced apart from one another and are separately connected or connectable toward the outside of the optoelectronic functional element (4; S).

10. Composite pane according to one of claims 1 through 9, wherein a visual marking, in particular a black print region, is associated with the contact switching element (T; 11), which identifies its position for the user.

11. Composite pane according to one of claims 1 through 10, implemented as a windshield (W) or roof glazing of a road vehicle, in particular a passenger car, or an aircraft or watercraft, in particular a boat or a passenger ship.

12. Composite pane assembly, in particular a vehicle glazing unit, having a composite pane according to one of claims 1 through 11, a control unit (15) for controlling the optical properties of the optoelectronic functional element (4; S), and a switching control unit (16) connected to the contact switching element (T; 11) for switching for manual control of the optoelectronic functional element (4; S), in particular for ON/OFF switching or for contrast or brightness adjustment or the like.

13. Composite pane assembly according to claim 12, wherein the composite pane is implemented in accordance with claim 9, and the switching control unit (16) has a number of inputs corresponding to the number of separately connectable conductors of the contact switching element (T; 11) and in response to signal reception at the respective signal inputs, activates one of more than two control states of the optoelectronic functional element (4; S).

14. Road vehicle, in particular a passenger car, having a composite pane assembly according to claim 12 or 13.

15. Method for producing a composite pane according to one of claims 1 through 11, wherein
- an optoelectronic functional element (4; S), which comprises an active layer (5), with which transparent flat control electrodes (8, 9) are associated on both surfaces, between a first carrier film (6) and a second carrier film (7), is provided and is provided with a capacitive contact switching element (T; 11), and
- the optoelectronic functional element is laminated between an outer pane (1) and an inner pane (2) via a thermoplastic intermediate layer (3).

## Revendications

1. Vitrage composite présentant des propriétés optiques contrôlables électriquement, comprenant une vitre extérieure (1) et une vitre intérieure (2), qui sont reliées l'une à l'autre par l'intermédiaire d'une couche intermédiaire thermoplastique (3),
dans lequel un élément fonctionnel optoélectronique (4; S) présentant des propriétés optiques contrôlables électriquement est intégré dans la couche intermédiaire (3), lequel élément fonctionnel comprend une couche active (5), à laquelle des électrodes de commande plates transparentes (8, 9) sont associées sur les deux surfaces, entre un premier film support (6) et un deuxième film support (7), et
dans lequel un élément de commutation par contact capacitif (T; 11) est disposé entre la couche active (5) et la couche intermédiaire thermoplastique (3), en contact direct avec le deuxième film support (7) tourné vers la vitre intérieure (2).

2. Vitrage composite selon la revendication 1, dans lequel, dans la région de l'élément de commutation par contact (T; 11), est disposée une couche conductrice structurée (12), qui est disposée sur la surface de l'élément fonctionnel optoélectronique (4; S) associé a la vitre intérieur.

3. Vitrage composite selon la revendication 2, dans lequel la couche conductrice structurée (12) présente une structure de commutation de contact formée par structuration au laser d'une couche conductrice déposée selon un procédé de revêtement sous vide.

4. Vitrage composite selon la revendication 1, dans lequel l'élément de commutation par contact (T; 11) est formé par une structure de commutation par contact dédiée de l'électrode de commande plate (9) de l'élément fonctionnel optoélectronique (4; S) faisant face à la vitre intérieure.

5. Vitrage composite selon l'une des revendications 1 à 4, dans lequel l'élément fonctionnel optoélectronique (4; S) est un élément fonctionnel PDLC, un élément fonctionnel PNLC, un élément fonctionnel SPD ou un élément fonctionnel électrochrome.

6. Vitrage composite selon l'une des revendications 1 à 5, dans lequel l'élément fonctionnel optoélectronique (4; S) est prévu dans une première sous-région (S) du vitrage composite et l'élément de commutation par contact (T; 11) est placé dans une deuxième sous-région du vitrage composite, qui est incluse dans la première sous-région.

7. Vitrage composite selon l'une des revendications 1 à 6, dans lequel l'élément fonctionnel optoélectronique (4; S) comporte un connecteur de commande (13) relié électriquement à l'élément de commutation par contact (T; 11), le connecteur de commande comportant de préférence une fiche MQS.

8. Vitrage composite selon l'une des revendications 1 à 7, dans lequel l'élément de commutation par contact (T; 11) comporte deux conducteurs parallèles ou concentriques (11a, 11b) qui présentent une section de commutation par contact espacée d'une distance comprise entre 0,3 et 1,5 cm, en particulier entre 0,5 et 1 cm, l'une de l'autre.

9. Vitrage composite selon l'une des revendications 1 à 8, dans lequel l'élément de commutation par contact (T; 11) comporte une pluralité de conducteurs qui sont espacés les uns des autres et qui sont connectés ou peuvent être connectés séparément vers l'extérieur de l'élément fonctionnel optoélectronique (4; S).

10. Vitrage composite selon l'une des revendications 1 à 9, dans lequel un repère visuel, en particulier une zone imprimée en noir, est associé à l'élément de commutation par contact (T; 11), qui identifie sa position pour l'utilisateur.

11. Vitrage composite selon l'une des revendications 1 à 10, mis en œuvre sous la forme d'un pare-brise (W) ou d'un vitrage de toit d'un véhicule routier, en particulier d'une voiture particulière, ou d'un aéronef ou d'un bateau, en particulier d'un bateau de plaisance ou d'un navire à passagers.

12. Ensemble de vitrage composite, en particulier unité de vitrage de véhicule, comprenant un vitrage composite selon l'une des revendications 1 à 11,
une unité de commande (15) pour commander les propriétés optiques de l'élément fonctionnel optoélectronique (4; S), et une unité de commande de commutation (16) reliée à l'élément de commutation par contact (T; 11) pour la commutation en vue de la commande manuelle de l'élément fonctionnel optoélectronique (4; S), en particulier pour la commutation marche/arrêt ou pour le réglage du contraste ou de la luminosité ou similaire.

13. Ensemble de vitrage composite selon la revendication 12, dans lequel le vitrage composite est réalisée conformément à la revendication 9, et l'unité de commande de commutation (16) comporte un nombre d'entrées correspondant au nombre de conducteurs pouvant être connectés séparément de l'élément de commutation par contact (T; 11) et, en réponse à la réception d'un signal au niveau des entrées de signal respectives, active l'un de plus de deux états de commande de l'élément fonctionnel optoélectronique (4; S).

14. Véhicule routier, en particulier une voiture particulière, comportant un ensemble de vitrage composite selon la revendication 12 ou 13.

15. Procédé de fabrication d'un vitrage composite selon l'une des revendications 1 à 11, dans lequel
- un élément fonctionnel optoélectronique (4; S), qui comprend une couche active (5) à laquelle sont associées, sur les deux faces, des électrodes de commande plates transparentes (8, 9), entre un premier film support (6) et un deuxième film support (7),
est prévu et est muni d'un élément de commutation par contact capacitif (T; 11), et
- l'élément fonctionnel optoélectronique est stratifié entre une vitre extérieure (1) et une vitre intérieure (2) par l'intermédiaire d'une couche intermédiaire thermoplastique (3).
